# EUROPEAN PATENT APPLICATION

(11) **EP 2 196 977 A1**
(43) Date of publication of application: **16.06.2010**
(21) Application number: 08291161.1
(22) Date of filing: 09.12.2008
(51) Int. Cl.: G09B 29/00

(54) **Production of maps**

(71) Applicant: Infoterra France SAS, 31522 Ramonville Sant-Agne (FR)
(72) Inventor: Foch, Hervé, 31560 Saint Léon (FR)
(74) Representative: Hummel, Adam

(57) **Abstract**

The invention relates to a Process of making a map comprising the steps of (1) digitalizing of a background image, (2) adding toponyms, and (3) performing quality checks.

## Description

The invention relates to image processing and map production systems. The invention is especially directed to the processing of images or data derived by remote-sensing systems, which may be, for example, satellite-borne or airborne, and in which the imaging or data is suitably recorded. The further description refers to satellite images and satellite data. The invention, however, is not restricted to that as indicated above. The invention especially relates to a process and a device for the production of maps at scale 1:50,000 (1cm = 500m) over any area in the world in less than 24 hours. The map scale can be extended to 1:25,000 or 1:100,000 using the same process.

### BACKGROUND OF THE INVENTION

Existing maps in the world at the scale 1:50,000 are usually linked to a mapping institute and usually cover only one country. The only set of maps at this scale (civilian source) that are partly available over the world corresponds to the former USSR Topographic map series. However, these maps are very old and do not offer the level of interoperability needed today.

Local topographic maps processed by national mapping institute are not available worldwide in less than 24 hours and their use, when authorized, is limited by license. Each country has its specific license.

In many cases, maps at this scale 1:50,000 are not available because protected or restricted in distribution. When delivery is possible, the maps are only delivered within days or weeks.

Maps processed by national mapping institutes have specific projectioning systems, their own specfication, size, format, contents, etc.

Examples of maps at scale 1:50,000 processed by national mapping institutes show that for a single scale, the contents of the maps and the representation of the information are different between different series. Furthermore, the projectioning systems are also different. These maps are not always available and when available they can be very old. As an example, the available maps of Kenya have been processed during the 70' and early 80'. Some of these maps do not have contour lines.

It appears that there is no commercial offer of map at scale 1:50,000 processed over any part of the world, which are not linked to a mapping institute.

Retailers of topographic map exist worldwide, offering usually paper maps or scanned maps. These maps are sourced, purchased and then delivered from the mapping institute.

As these maps are paper maps or scanned files from the paper maps, individual layers of information, database and GIS compatible files do not exist.

### OBJECT OF THE INVENTION

It is an object of the invention to describe a method and a device that provides maps at a scale 1:50,000 in less time then possible with methods of the prior art.

### SUMMARY OF THE INVENTION

The invention describes a process of making a map comprising the steps of:
- digitalizing information of a background image for transportation network, water bodies and other specific features
- adding toponyms
- adding information in relation with the elevation of the area such as contour lines, height points or shade image
- digitalizing or extraction of information from background image for landcover
- performing quality checks
- Packaging information and files to be delivered

According to one aspect of the invention the step of digitalization of a background image comprises the steps of digitalizing of a ground transportation network, digitalizing of hydrology information, digitalizing of bridges/fords, digitalization of special features and exporting the resulting data to a geographic information system.

According to another aspect of the invention the step of adding toponyms extracted from an open-source database.

According to a further aspect of the invention the further information comprises contour lines, elevation points with a predefined density, and shade image. The shade image is merged with the landcover information.

According to an aspect the invention discloses a process of making a map comprising the steps of: (1) digitalizing of a background image, (2) adding toponyms, and (3) performing quality checks.

According to another aspect of the invention the step of digitalization of a background image comprises the steps of (1) splitting the background image, (2) digitalizing of a ground transportation network, (3) digitalizing of hydrology information, (4) digitalizing of bridges/fords, and (5) exporting the resulting data to a geographic information system.

According to another aspect of the invention the step of adding toponyms comprises the steps of (1) generating one single area, (2) extracting of toponyms, and (3) extracting further information.

According to a further aspect of the invention the further information comprises contour lines, elevation points with a predefined density, and shade images.

The invention further discloses an apparatus for carrying out the process in accordance with the respective aspects of the invention.

### BRIEF DESCRIPTION OF THE DRAWINGS

Fig. 1 shows the major steps of the process of the invention
Fig. 2 shows an example of the digitalization of the ground transportation network
Fig. 3 shows an example of the digitalization of the bridges/fords
Fig. 4 shows an example of toponyms exported to the GIS project
Fig. 5 shows an example of the extraction of contour lines
Fig. 6 shows an example of the extraction of height points
Fig. 7 shows an example of the extraction of the shade image
Fig. 8, 9 show examples of area objects (landcover, merged with elevation shade)
Fig. 10 shows an example of the setting-up of the whole map

### DETAILED DESCRIPTION

In one of its aspects, the invention is embodied in a method for producing a "universal" map, designed and studied to cover the largest need at the scale 1:50,000 compatible with the largest set of tools, with one single specification and one single license for any part of the world. The produced map is an answer to anybody in need of a very accurate map, anywhere in the world, within a very short time. Wherever the covered area is, the map specification is the same, the map accuracy is the same, and the delivered files are identical.

As the users of map may want to print it, to use it in a dedicated GIS tool or display it with Google Earth or GE like tools, the map is provided in a set of files enabling all the applications.

### Hereunder, the list of delivered files for one map:

*This database is delivered and presented in various ways. The delivery package includes :*

| | |
|---|---|
| *.shp files for all the individual layers* | *to be used in any GIS tool of the market* |
| *.mxd file* | *to be used with ArcGIS tool as* a *"prepared project"* |
| .*pmf file* | *to be used with a freeware viewer* |
| .*geotif* | *to be used* as *a raster image with any software* |
| *.geotif* + *.shp* | *to be used specifically with Eliseo system* |
| *.kml file* | *to be used with Google Earth* |
| *.pdf "ready-to-print A0"* | *to be printed at scale 1:50,000 with A0 sheet paper* |
| *.pdt "ready-to-print A4"* | *to be printed at scale 1:50,000 with A4 sheet paper as an atlas* |
| *WMS* | *to enable web base services through a geo-server* |

The invention offers a solution to produce a map at scale 1:50,000 (1 cm = 500m) over any area in the world, in less than 24 hours. The map is provided in a package including various files enabling to print the map in A0 or A4 size (keeping the correct scale) and enabling to use it in GIS tools (i.e. ELISEO system) or Google Earth.

The method of the invention is processed based on satellite images (e.g. SPOT5) extracted from an organized archive, completed with information extracted from open source (toponyms).

The map produced by the process of the invention has all the components of a classical topographic map, but one of its main characteristic is that it can be processed in a very short time, based on automatic processing loops.

A part of the map's information is extracted by image analysis. The selection of the needed map (a tile of 15'x15') is done through a web interface and the delivery is done also through a web interface. Each map cover an area fixed at 15'x15'. The horizontal accuracy is 15m and the vertical accuracy is 20m (@90%).

The invention is also related to a device that hosts the process of the invention. The process of the invention can be implemented e.g. by software and the device by a computer.

In the following the process of the invention is described in more detail.

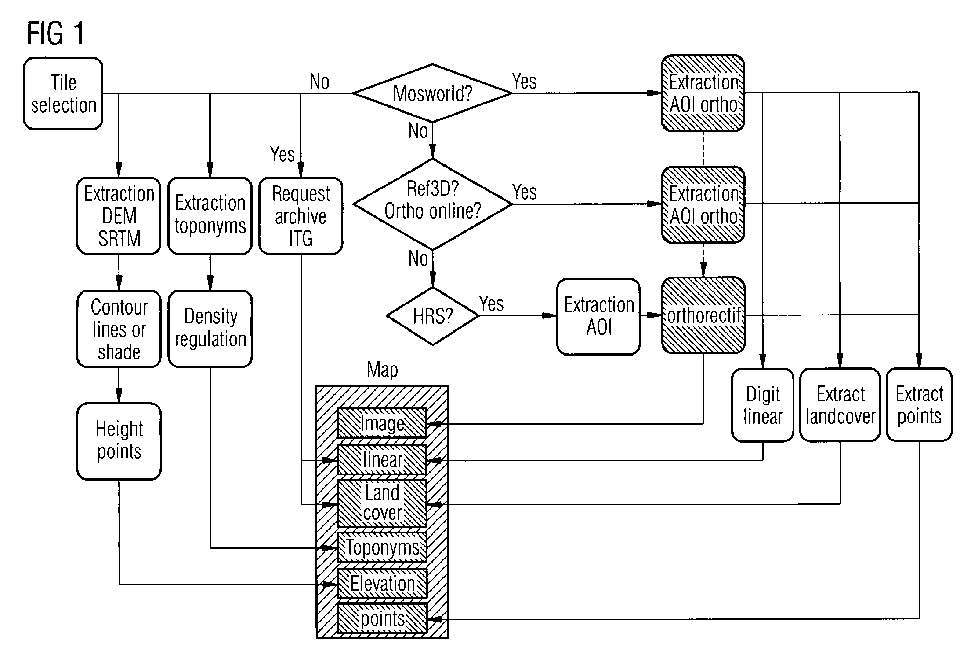

Fig. 1 is a diagram showing the major steps of the process of the invention.

The maps produced by the process of the invention comprise elevation information, population information, ground transportation information, vegetation & physiography information, inland water information, sea & ocean information, aeronautical information, and industry information. The elevation information comprises the information about contour lines, height points, and shade image. The population information comprises the information about built-up areas dense, build-up areas moderate, built-up areas sparse, built-up areas other and toponyms. The ground transportation information comprises the information about railways, main roads, other roads & trails, and bridges/fords & fords. The vegetation & physiography information comprises the information about trees/forests, crop lands, scrubs/bushes, grounds/rocks, swamps/mangroves, tundra, oases, sand, ice/snow. The inland water information comprises the information about rivers, lakes, and damss/fords/fords. The sea & ocean information comprises the information about seas and oceans. The aeronautical information comprises the information about airports. The industry information comprises the information about industrial areas and harbors. Special features are comprised also, such as mining areas, saltmarsh, orchard, stadium, golf course etc.

According to the invention, for each of theses elements either the complete information can be provided for a produced map or only parts of it, i.e., certain elements are filtered out before production, e.g., in order to match with customer requirements.

In one embodiment the information provided by the process of the invention is structured as a database of objects, organized in different layers to be superimposed or combined together. The objects can be linear objects, punctual objects or areal objects.

For this embodiment, the delivery packages of the database comprise (1) shp files for all the individual slayers (to be used in any GIS tool on the market), (2) mxd file (to be used with ArcGIS tool as a "prepared project", (3) pmf file (to be used with a freeware viewer), (4) geotif (to be used as a raster image with any software, (5) geotif and shp (to be used specifically with Eliseo system), (6) kml file (to be used with Google Earth), pdf "ready-to-print A0" (to be printed at scale 1:50,000 with A0 sheet paper), (7) pdf "ready-to-print A4" (to be printed at scale 1:50,000 with A4 sheet paper as an atlas, and (8) WMS (to enable web base services through a geo-server.

As indicated above, the source data of the process of the invention are satellite images (e.g. satellite images of SPOT5) extracted from an organized archive, completed with information extracted from open source (toponyms).

The delivery package of this and other embodiments can be produced either in an automatic mode or in a semi-automatic mode. In the automatic mode all the steps are automatically performed, e.g. by a computer. In the semi-automatic mode some or all of the steps are performed manually.

### 1. FIRST MAJOR STEP - DIGITALIZATION OF THE BACKGROUND IMAGE

The first major step can be divided into the following steps: (1) splitting the background image, (2) digitalization of the ground transportation network, (3) digitalization of the hydrology, (4) digitalization of the bridges/fords, (5) export to a geographic information system.

### 1.1. FIRST STEP - SPLITTING THE BACKGROUND IMAGE

The process of the invention splits a background image geographically into at least two parts which are of about the same size. The process of the invention then processes these at least two parts in parallel.

### 1.2. SECOND STEP - DIGITALIZATION OF THE GROUND TRANSPORTATION NETWORK

After splitting of the background image, the Ground Transportation Network (GTR) of each part is digitalized in a first step, with a first image analysis over the whole area to determine the main roads and the railway if existing. Once the main roads have been identified, they are digitalized. According to the invention, main roads are roads that connect the main villages whatever is the revetment of the width of the road. The characteristic of "main" or "other" ins linked to a local context and is not an absolute rule. A simple trail can be a "main" road in a map, as it is the only way to connect villages together.

Then the other roads and trails are identified. Once the other roads and trails have been identified, they are digitalized, taking into account the time constraints.

Specific attention is given to connect together the main and other roads, in order to describe the real network of transportation. In order to meet the time constraint, roads are digitalized using a priority based on their functions.

The "main" roads are digitalized first over the whole area, then and linked to this first part of the network, the connected "other" roads are digitalized over the whole area. Once this is done, "other" roads of minor importance are digitalized. Target is to have a coherent network digitalized within the time constraint, and not a small part of the area fully digitalized and the rest of the area with nothing.
According to the invention, other roads and trails are roads and trails that connect villages or built-up areas. At the end of this step of the process of the invention, the result is an organized network of main roads and other roads and trails. During the process different colors are assigned to main roads and other roads and trails. For instance, the color red is assigned to main roads while the color orange is assigned to other roads and trails.

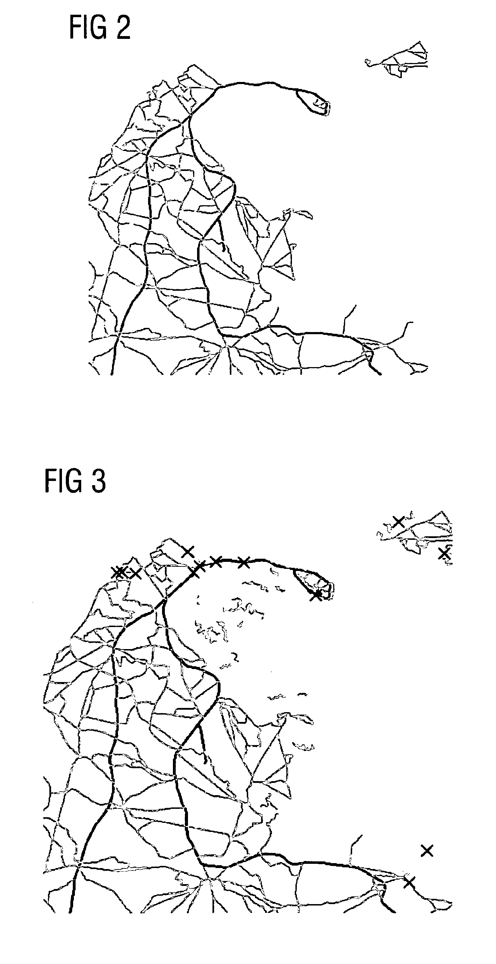

Fig. 2 shows an example of the outcome of this step.

### 1.3. THIRD STEP - DIGITALIZATION OF THE HYDROLOGY

Once the GTR network has been digitalized, the hydrology is digitalized.

### 1.4. FOURTH STEP - DIGITALIZATION OF THE BRIDGES/FORDS

Once the GTR network and the hydrology have been digitalized, the bridges/fords have to be identified from the background image. The process according to the invention is capable of dealing with two different cases.

FIRST CASE: If a bridge/ford is visible for the process of the invention, i.e., the process of the invention can clearly identify the bridge/ford from the background image, and no detection of track, trail or road because of the landscape or the quality of the image, then the process of the invention indicates the bridge/ford on the map.

SECOND CASE: If a bridge/ford is not visible for the process of the invention, the process of the invention makes a prediction concerning the location of bridges/fords. This prediction is based on the intersection of the Ground Transportation Network and the hydrology produced so far. According to the invention, one rule is that a road crossing a river should be associated to a bridge or ford.

A predictive tool indicates to the operator all the intersections between GTR network & IWA network.

Fig. 3 shows an example of an outcome of this step.

### 1.5. FIFTH STEP - INTERPRETATION AND DIGITALISATION OR AUTOMATIC EXTRACTION OF VEGETATION & PHYSIOGRAPHY

The landcover information is extracted from the background image using digitalization or automatic extraction. Homogeneous areas are selected, digitalized and categorized with the corresponding attribute such as trees/forests, scrub/bush, oasis, rock or other within the list.

Each object corresponds to a homogeneous area of one single landcover.

### 1.6. SIXTH STEP - EXPORT TO A GEOGRAPHIC INFORMATION SYSTEM

Hereunder, GTR, hydrology, bridges/fords/fords and landcover objects are displayed. At this step, all these layers are exported to a Geographic Information System (GIS). The resulting files digitalized for the at least two parts of the background image are exported on the GIS.

The first major step of the process of the invention can be finalized within 4 hours (with current hardware).

### 2. SECOND MAJOR STEP - ADDING TOPONYMS

This step can be divided into the following steps: (1) extraction of toponyms, (2) filtering the toponyms (it should correspond to a detail visible on the image background) Once this is done, the process of the invention performs the following steps:

### 2.1. EXTRACTION OF TOPONYMS

The process of the invention extracts the relevant toponyms from an Open-Source database. Then the process of the invention displays the toponyms over the single area.

### 2.2. FILTERING OF TOPONYMS

After that the process of the invention filters the toponyms to keep if possible an average density around 80 to 120 toponyms per sheet. As a final step, the process of the invention checks the toponyms location on top of the background satellite image.

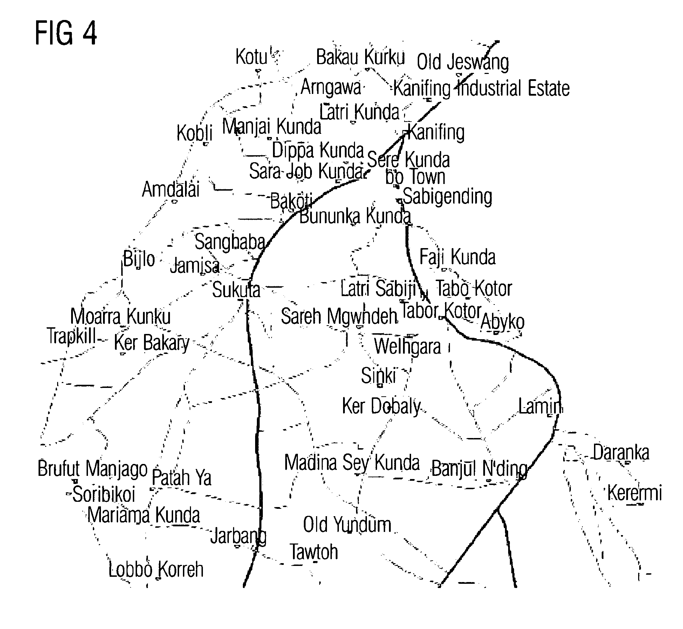

Fig. 4 shows an example of toponyms exported to the GIS project.

### 3. THIRD STEP - EXTRACTION OF ELEVATION INFORMATION

After processing the toponyms, the process of the invention creates by automatic extraction the following files, using COTS software: (1) Contour lines, (2) elevation points with a predefined density (e.g. around 80 to 100 per sheet), and (3) shade image. For the elevation, the information of the invention is based on an available Digital Elevation Model (DEM) such as SRTM (Shuttle Radar Topography Mission) or DTED2 (Digital Terrain Elevation Data Level 2).

### 3.1. EXTRACTION OF CONTOUR LINES

Contour lines are extracted using COTS software with an equidistance of 50m. The contour lines are edited manually in some cases, to correct some errors linked to the automatic process.

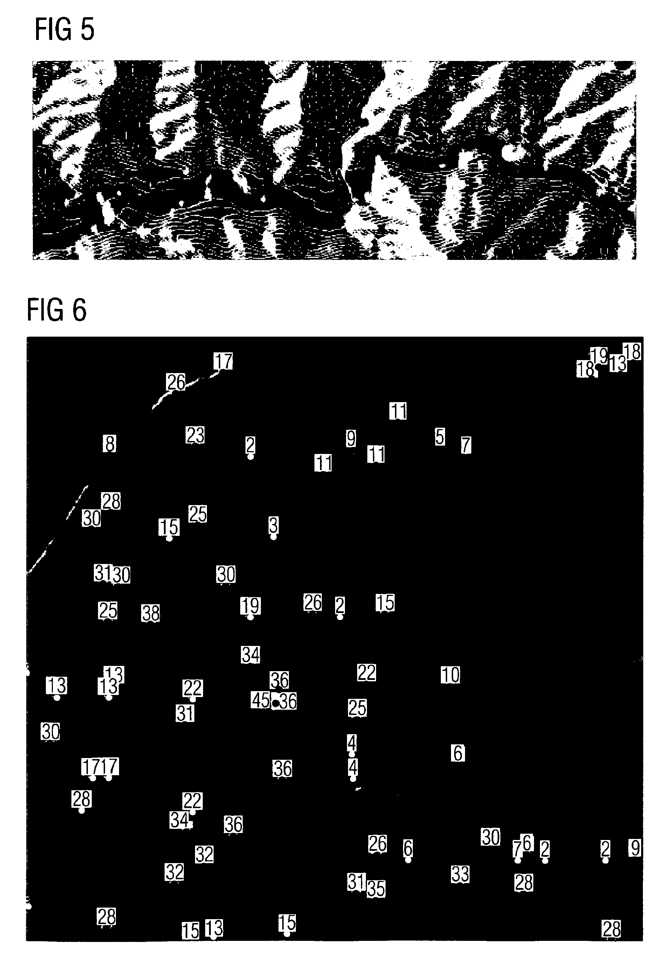

Fig. 5 shows an example of an outcome of this step.

### 3.2. EXTRACTION OF HEIGHT POINTS

The process of the invention computes the height points from the Digital Elevation Model (DEM), based on a grid of 2x2km superimposed to the area. After that the process of the invention extracts the point with the maximum elevation and the point with the minimum elevation for each square (2x2km). Further, the process of the invention provides a filtering of these points, in order to obtain a good repartition of the points over the area. The position of height points can be adjusted manually in order to fit with natural or artificial features such as top of mountains/hills, cross-roads, river damss/fords, etc.

Fig. 6 shows an example of an outcome of this step.

### 3.3. EXTRACTION OF THE SHADE IMAGE

The shade image is computed from the DEM, selecting an azimuth and an elevation of the sun, shading the landscape.

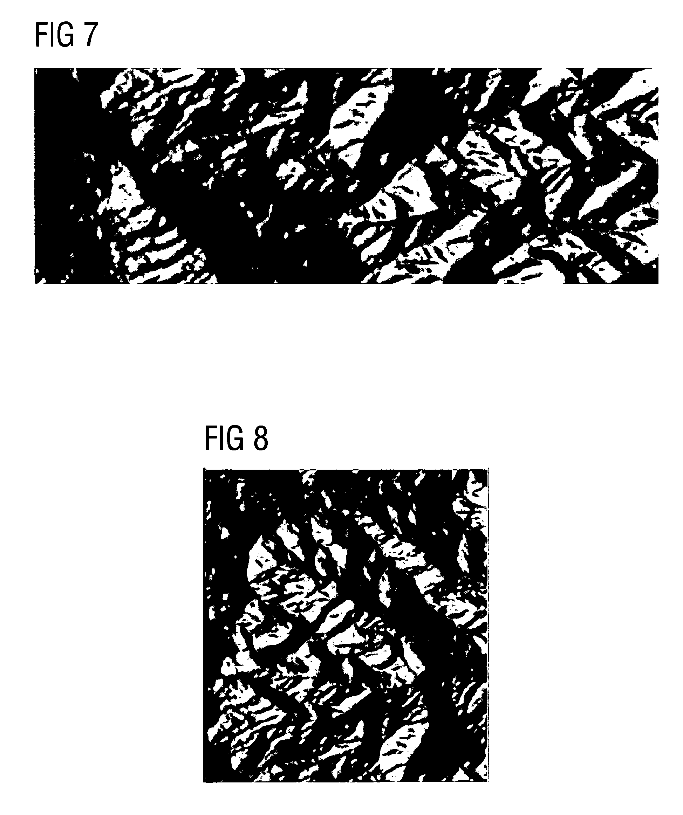

Fig. 7 shows an example of an outcome of this step.

### 3.4. ELEVATION INFORMATION ARE EXPORTED TO THE GIS

The third major step of the process of the invention can be finalized in less than 2 hours (with current hardware).

### 4. FOURTH STEP - COMBINATION OF ALL THE LAYERS EXTRACTED FROM THE THREE MAJOR STEPS

### 4.1. LINEAR AND PONCTUAL

The linear objects (GTR, IWA, contour lines) and the ponctual objects (toponyms, special features, elevation points) are displayed on top of the other layers, with a selection of colors enabling a good identification.

### 4.2. AREA OBJECTS (LANDCOVER, ELEVATION SHADE)

These objects are combined together, in order to add the shadow information extracted from the elevation, to the landcover information.

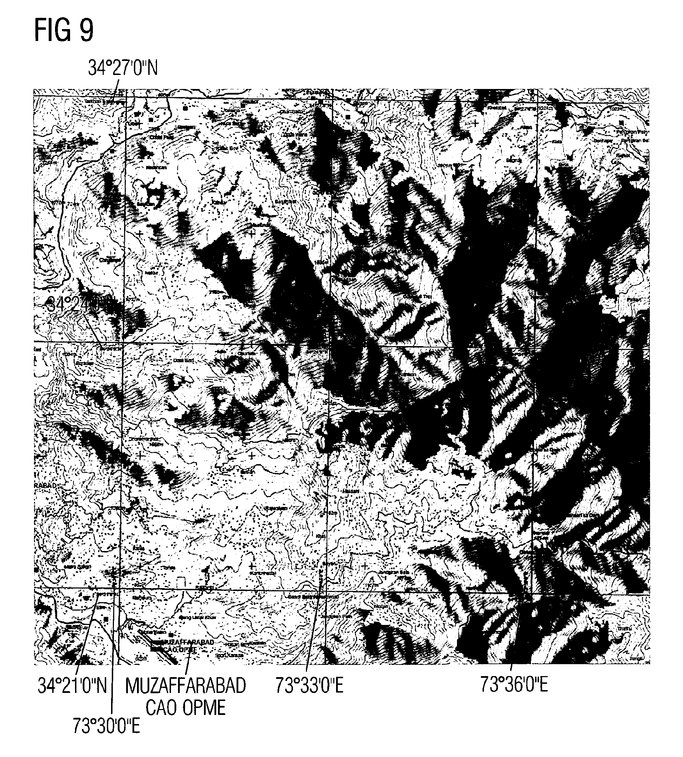

Fig. 8 and 9 show examples of outcomes of these steps.

### 4.3. SETTING-UP THE WHOLE MAP

At this step, all the information is merged in the final map as a .pdf file. Information comprises points, text, linear and area. All items are combined together as hereunder.

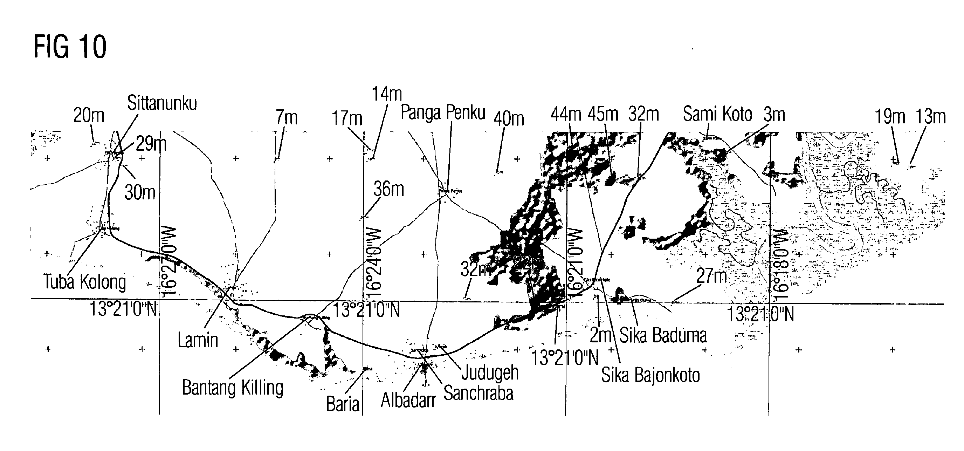

Fig. 10 shows an example of an outcome of this step.

### 4.4. QUALITY-CHECK

Quality and coherence of the product is checked based on the printed map. Then, if OK, the product is validated.

### 4.5. PACKAGING

All the layers and files described hereunder are computed and delivered through ftp; DVD or any other support/media

| | |
|---|---|
| *.shp files for all the individual layers* | *to be used in any GIS tool of the market* |
| *.mxd file* | *to be used with ArcGIS tool as a "prepared project"* |
| *.pmf file* | *to be used with a freeware viewer* |
| *.geotif* | *to be used* as *a raster image with any software* |
| *.geotif + .shp* | *to be used specifically with Eliseo system* |
| *.kml file* | *to be used with Google Earth* |
| *.pdf "ready-to-print A0"* | *to be printed at scale 1:50,000 with A0 sheet paper* |
| *.pdf "ready-to-print A4"* | *to be printed at scale 1:50,000 with A4 sheet paper as an atlas* |
| *WMS* | *to enable web base services through a geo-server* |

The present invention also discloses devices or apparatus for carrying out the process in accordance with anyone of the above described embodiments of the process of the invention.

## Claims

1. Process of making a map comprising the steps of:
a. digitalizing of a background image,
b. adding toponyms, and
c. performing quality checks.

2. A process according to claim 1, wherein the step of digitalization of a background image comprises the steps of
a. splitting the background image,
b. digitalizing of a ground transportation network,
c. digitalizing of hydrology information,
d. digitalizing of bridges/fords, and
e. exporting the resulting data to a geographic information system.

3. A process according to claim 1 or claim 2, wherein the step of adding toponyms comprises the steps of
a. generating one single area,
b. extracting of toponyms, and
c. extracting further information.

4. A process according to claim 3, wherein the further information comprises contour lines, elevation points with a predefined density, and shade image.

5. Apparatus for carrying out the process in accordance with one of the claims 1 to 4.
